# EUROPÄISCHE PATENTANMELDUNG

(11) **EP 3 739 385 A1**
(43) Veröffentlichungstag der Anmeldung: **18.11.2020**
(21) Anmeldenummer: 20174868.8
(22) Anmeldetag: 15.05.2020
(51) Int. Cl.: G03B 29/00, A47B 9/00

(54) **HÖHENVERSTELLBARER TISCH MIT EINER EINE FERNPROJEKTIONSEINRICHTUNG AUFWEISENDEN BETÄTIGUNGSEINHEIT**

(30) Priorität: 17.05.2019 DE 102019113196
(71) Anmelder: Veyhl GmbH, 75389 Neuweiler (DE)
(72) Erfinder: BRUDER, Wolfgang, 72226 Simmersfeld-Aichhalden (DE); GROß, Anja, 72218 Wildberg (DE); POMMERENKE, Uwe, 71159 Mötzingen (DE)
(74) Vertreter: Kohler Schmid Möbus Patentanwälte

(57) **Zusammenfassung**

Die Erfindung betrifft einen höhenverstellbarer Tisch (10) mit einem Tischgestell (12) das eine Tischplatte (14) trägt, mit einem Stellantrieb (32), einer Steuereinrichtung (34) mit einer Betätigungseinheit (38) zum Verstellen des Tischgestells (12). Die Betätigungseinheit (38) weist erfindungsgemäß eine Fernprojektionseinrichtung (42) zum projizierten Anzeigen einer Information (44) zu einem Betriebsparameter, insbesondere der Tischhöhe H, des Tischs (10) aufweist.

## Beschreibung

Die Erfindung betrifft einen höhenverstellbaren Tisch mit einem Tischgestell, das eine Tischplatte trägt, mit einem elektromotorischen Stellantrieb, mit einer Steuereinrichtung für den Stellantrieb und mit einer Betätigungseinheit.

Elektromotorisch höhenverstellbare Tische bieten einen großen Bedienkomfort und lassen sich durch einfaches Betätigen der Betätigungseinheit bequem und ohne Kraftaufwand verstellen. Aufgrund ihrer ergonomischen Vorteile konnten sich derlei Tische zwischenzeitlich in diversen Arbeitsumgebungen, insbesondere in Büros, fest etablieren.

Die moderne Büroorganisation setzt zunehmend auf flexible Arbeitsplatzlösungen, die auch als "Flexible Office" oder "Desksharing" bezeichnet werden. Hier teilen sich die Mitarbeiter einer Organisationseinheit die jeweilig zur Verfügung stehenden Arbeitsplätze. Dies wird durch die Anpaßbarkeit der elektromotorisch höhenverstellbaren Tische auf die individuell geeignete Arbeitshöhe begünstigt. In der Praxis muss die individuell bevorzugte Arbeitshöhe allerdings häufig durch iteratives Verstellen der Tischhöhe gefunden werden. Dies kann sich mitunter zeitaufwendig und mühsam gestalten.

Es ist deshalb die Aufgabe der Erfindung, einen höhenverstellbaren Tisch anzugeben, der eine nochmals weiter verbesserte Handhabung aufweist. Diese Aufgabe wird durch einen höhenverstellbaren Tisch mit den in Anspruch 1 angegebenen Merkmalen gelöst. Bevorzugte Weiterbildungen der Erfindung sind in den Unteransprüchen sowie in der Beschreibung angegeben.

Bei dem erfindungsgemäßen Tisch weist die Betätigungseinheit eine Fernprojektionseinrichtung zum projizierten Anzeigen einer, vorzugsweise durch die Steuereinrichtung ausgegebenen, Information zu einem Betriebsparameter des Tischs auf. Dadurch kann dem Benutzer beispielsweise eine jeweilig eingestellte Tischhöhe auf bequeme und einfache Weise auf einer geeigneten Projektionsfläche - gut lesbar - angezeigt werden. Durch einmaliges Auffinden der individuell als ergonomisch empfunden Tischhöhe kann der Benutzer so die, insbesondere durch andere Benutzer, veränderte Tischhöhe vereinfacht und zügig auf seine individuell ergonomische Tischhöhe einstellen. Dadurch wird die Handhabung des höhenverstellbaren Tischs weiter verbessert. Je nach Positionierung der Betätigungseinheit bezüglich der Tischplatte kommen unterschiedliche Projektionsflächen für die Anzeige des Betriebsparameters, insbesondere der jeweiligen Tischhöhe, in Betracht. Vorstellbar sind insbesondere eine Wand, der Boden, auf dem der Tisch angeordnet ist, oder sogar eine Raumdecke. Vorstellbar ist darüber hinaus, dass Informationen zur aktuellen Nutzung des Tischs durch einen Benutzer, beispielsweise in Form einer belegt/frei Anzeige, angezeigt werden. Darüber hinaus kann die Steuereinrichtung auch dazu programmiert sein, nach Ablauf einer vorgegebenen Zeitspanne eines Betriebszustands des Tischs eine diesbezügliche Erinnerungsmeldungen auszugeben und zum Wechsel der Arbeitshaltung, d.h. Sitz-/Stehwechsel anzuregen.

Nach einer besonders bevorzugten Weiterbildung der Erfindung bilden die Betätigungseinheit und die Projektionseinrichtung gemeinsam eine Baueinheit. Dadurch kann einerseits eine besonders kostengünstige Fertigung und Montage des Tischs erreicht werden. Andererseits wird das ästhetische Erscheinungsbild des Tischs nicht durch weitere, insbesondere vom Tisch wegstehende, Anbauteile gestört. Die Betätigungseinheit weist dabei vorzugsweise ein Gehäuse auf und die Projektionsanzeige ist zumindest teilweise, bevorzugt insgesamt, in dem Gehäuse angeordnet.

Nach der Erfindung weist die Betätigungseinheit vorzugsweise eine Schaltwippe auf, die aus dem Gehäuse der Betätigungseinheit, bevorzugt über eine stirnseitige Öffnung des Gehäuses, herausragt. Die Schaltwippe ist dabei nach der Erfindung vorteilhaft relativ zum Gehäuse bidirektional um eine Schwenkachse aus einer Neutralstellung in eine jeweilige Funktionsstellung auslenkbar. Ist die Schwenkachse der Schaltwippe im Betriebseinsatz des Tischs horizontal verlaufend angeordnet, so kann die Schaltwippe für eine Vergrößerung der Tischhöhe in Lotrichtung intuitiv nach oben in eine obere Funktionsstellung und zum Verringern der Tischhöhe nach unten in eine untere Funktionsstellung ausgelenkt bzw. verschwenkt werden.

Die Projektionseinrichtung umfasst nach einer bevorzugten Ausführungsform der Erfindung einen lichtleitenden Abschnitt bzw. einen Lichtleiter, der vorzugsweise integraler Bestandteil der Schaltwippe und/oder des Gehäuses ist. Der Lichtleiter ist somit durch das Material des Gehäuses bzw. der Schaltwippe gebildet. Dadurch kann die Anzahl der erforderlichen Teile und somit die Fertigungskosten für die Projektionseinheit klein gehalten werden.

Unter fertigungstechnischen Aspekten kann die Schaltwippe als ein Mehrkomponentenbauteil ausgeführt sein. Die Schaltwippe kann dabei den vorgenannten Lichtleiter (erste Materialkomponente) und vorzugsweise eine lichtundurchlässige zweite Materialkomponente, d.h. einen lichtundurchlässigen Abschnitt, umfassen. Dadurch kann die Schaltwippe als ein optisches Bauteil dienen. So kann der Lichtleiter beispielsweise eine oder mehrere optische Fasern umfassen.

Nach der Erfindung kann die Fernprojektionseinrichtung eine optische Linse, insbesondere eine Sammellinse, umfassen. Ist die Linse fokussierbar, so kann darüber hinaus die Anzeige der betreffenden Betriebsparameterinformation auf die Entfernung der jeweiligen Projektionsfläche von der Linse eingestellt werden. Die Linse kann der Schaltwippe oder dem Gehäuse angeformt sein.

Zum Bereitstellen einer visuellen Orientierungshilfe weist die Betätigungseinheit vorzugsweise eine weitere Strahlungs- bzw. Lichtquelle auf. Das Gehäuse oder die Schaltwippe kann zumindest abschnittsweise Lumineszenz Farbstoffe umfassen, die durch das von der zweiten Licht- bzw. Strahlungsquelle emittierte Licht anregbar sind. Die Wellenlänge des von der zweiten Lichtquelle, beispielsweise einer LED, emittierten Lichts kann beispielsweise im UV-Bereich liegen.

Die Betätigungseinheit ist nach der Erfindung vorzugsweise an der Unterseite der Tischplatte befestigt. Dies bietet fertigungstechnische Vorteile und einen hohen Bedienkomfort. Auch wird dadurch die nutzbare Oberseite der Tischplatte nicht beeinträchtigt. Die Betätigungseinheit kann auch in das Material der Tischplatte zumindest teilweise oder vollständig eingelassen sein. Dadurch kann eine besonders kompakte und unter ästhetischen Aspekten vorteilhafte Einbaulösung realisiert werden. Die Fernprojektionseinrichtung ist vorzugsweise für eine Projektion der Information in Lotrichtung nach unten eingerichtet. Dadurch kann die Information dem Benutzer selbst bei einer stehenden Arbeitsweise am Tisch auf einfache und gut lesbare Weise auf dem Boden, auf dem der Tisch ruht, angezeigt werden.

Das Gehäuse der Betätigungseinheit und /oder die Schaltwippe kann/können insgesamt aus einem Kunststoffmaterial bestehen. Dadurch kann die Betätigungseinheit besonders kostengünstig und zugleich mechanisch ausreichend stabil realisiert werden. Darüber hinaus kann die Betätigungseinheit auch elektrisch leitfähig ausgeführt werden, um beispielsweise den Anforderungen an einen Potentialausgleich gerecht zu werden.

Das Gehäuse der Betätigungseinheit ist vorzugsweise staubdicht gekapselt ausgeführt, um einem unerwünschten Eindringen von Staub und dergleichen in das Gehäuse entgegenzuwirken.

Die Betätigungseinheit kann mit der Tischplatte verklebt oder verschraubt sein oder an einem Rastelement der Tischplatte lösbar verrastet gehalten angeordnet sein. Besonders vorteilhaft ist eine Bajonettverbindung zwischen der Betätigungseinheit und der Tischplatte, zumal dadurch eine laststabile und dennoch werkzeugfrei lösbare Schnellverbindung zwischen den Bauteilen erreicht werden kann. Auch kann dadurch die Gesamtbauhöhe der Tischplatte und der Betätigungseinheit klein gehalten werden.

Das Tischgestell kann in an sich bekannter Weise zumindest eine oder auch mehrere teleskopierbare Tischsäule(n) umfassen. Jede Tischsäule kann dabei zwei oder mehr ineinandergreifende Säulensegmente aufweisen. Weist das Tischgestell zwei oder mehr solcher Tischsäulen auf, so können diese - neben der Tischplatte - mittels einer sogenannten Traverse miteinander mechanisch verkoppelt sein. Der Tisch kann für jede der Tischsäulen jeweils einen elektrischen Stellantrieb oder für alle Tischsäulen insgesamt nur einen gemeinsamen elektrischen Stellantrieb aufweisen. Die Tischsäulen können über ein Synchronisationsmittel, beispielsweise eine Synchronwelle oder einen Zugmitteltrieb, miteinander mechanisch zwangsweise bewegungsgekoppelt sein. Insbesondere in dem Fall, dass jede Säule einen eigenständigen Stellantrieb aufweist kann eine Hallsensor-basierte Synchronisation auf zuverlässige und kostengünstige Weise erreicht werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1: einen elektromotorisch höhenverstellbaren Tisch mit einer Betätigungseinheit, die eine Projektionseinrichtung zum Anzeigen von Informationen zu Betriebsparametern des Tischs umfasst.
- Fig. 2: die Betätigungseinheit des Tischs gemäß Fig. 1 in einer freigestellten Detailansicht; und
- Fig. 3: die Betätigungseinheit des Tischs gemäß Fig. 1 in einer schematisierten Schnittdarstellung.

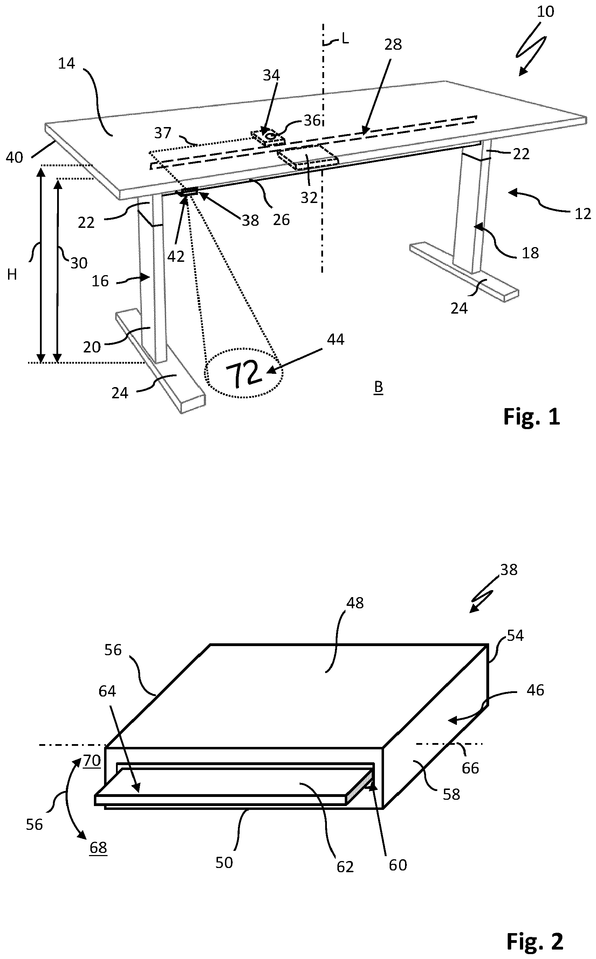

**Fig. 1** zeigt einen höhenverstellbaren Tisch **10**, der hier rein beispielhaft in Form eines Bürotischs ausgeführt ist. Der Tisch 10 weist ein Tischgestell **12** mit einer darauf angeordneten Tischplatte **14** auf. Das Tischgestell 12 umfasst hier beispielhaft zwei teleskopartige Tischsäulen **16**, **18** mit jeweils einem ersten und einem zweiten Säulensegment **20**, **22.** Die Säulensegmente 20, 22 sind jeweils als Hohlprofil ausgeführt und können beispielsweise in Form eines Rund- oder eines Rechteckprofils ausgeführt sein. Die Säulensegmente 20, 22 einer jeweiligen Tischsäule 16, 18 können in an sich bekannter Weise über ein Zugmitteltrieb, eine Spindel oder in anderer dem Fachmann geläufiger Weise miteinander verkoppelt sein. Zur Abstützung der Tischsäulen 16, 18 am Boden dienen hier beispielhaft Fußprofile **24**, die gemäß Figur 1 als T- oder alternativ auch als sogenannte C-Profile ausgeführt sein können. Die beiden gezeigten Tischsäulen 16, 18 können über eine ein- oder mehrteilige Traverse **26** miteinander mechanisch starr verbunden sein. Die Tischsäulen 16, 18 sind über ein in Fig. 1 mit strichlierter Linie wiedergegebenes Synchronisationsmittel **28**, hier in Form einer Synchronwelle, miteinander zwangsweise bewegungsgekoppelt. Es versteht sich, dass das Synchronisationsmittel 28 alternativ auch ein Zugmittel umfassen kann. Zum Verstellen der Auszugslänge **30** des Tischgestells 12 bzw. der Tischhöhe **H** in Lotrichtung **L** dient ein elektrischer Stellantrieb **32** bzw. ein Elektromotor, der durch eine Steuereinrichtung **34** gesteuert ist. Zur Energieversorgung des elektrischen Stellantriebs 32 kann eine Batterie bzw. ein Akkumulator und/oder ein Netzanschlusskabel vorgesehen sein (in Fig. 1 nicht dargestellt).

Die Steuereinrichtung 34 umfasst einen Sensor **36** zum Bestimmen bzw. zum meßtechnischen Erfassen eines Betriebsparameters des Tischs 10, hier der jeweilig eingestellten Tischhöhe H bzw. der Auszugslänge 30 des Tischgestells 12. Die Steuereinrichtung 34 ist ferner über ein Steuerkabel **37** mit einer - hier beispielhaft elektromechanisch ausgeführten - Betätigungseinheit **38** elektrisch leitend verbunden, mittels derer der Stellantrieb 32 zur Höhenverstellung des Tischs 10 benutzerseitig angesteuert bzw. betätigt werden kann. Die Betätigungseinheit 38 ist an der Unterseite **40** der Tischplatte 14 befestigt. Die Betätigungseinheit 38 umfasst eine Fernprojektionseinrichtung **42**, mittels derer zumindest eine durch die Steuereinrichtung 34 ausgegebene Information **44** zu einem Betriebsparameter des Tischs, hier der aktuell eingestellten Tischhöhe H, mittels Projektion auf eine geeignete Projektionsfläche, hier dem Boden **B**, projizierbar, d. h. visuell anzeigbar, ist.

**Fig. 2** zeigt die Betätigungseinheit 38 in einer schematischen Darstellung. Die Betätigungseinheit 38 weist ein Gehäuse **46** mit einem Deckel **48**, einem Boden **50**, einer Stirnseite **52**, einer Rückwand **54** sowie zwei einander gegenüberliegend angeordneten Seitenwänden **56**, **58** auf.

Das Gehäuse 46 weist eine stirnseitige Öffnung **60** auf. Eine Schaltwippe **62** erstreckt sich über die stirnseitige Öffnung 60 des Gehäuses 46 aus dem Gehäuse 46 heraus. Die Schaltwippe 62 ist mit ihrem freien Randabschnitt **64** relativ zum Gehäuse 46 um eine mit **66** bezeichnete Schwenkachse bidirektional aus einer in Fig. 2 gezeigten Neutralstellung in eine untere erste und eine obere zweite Funktionsstellung **68**, **70** relativ zum Gehäuse 46 auslenkbar. In der ersten Funktionsstellung 68 der Schaltwippe 62 ist durch die Schaltwippe 62 ein Absenken der Tischplatte 14 mittels des Stellantriebs 32 bewirkt. In der zweiten Funktionsstellung 70 der Schaltwippe 62 ist durch die Schaltwippe 62 ein Anheben der Tischplatte 14 mittels des Stellantriebs 32 bewirkt.

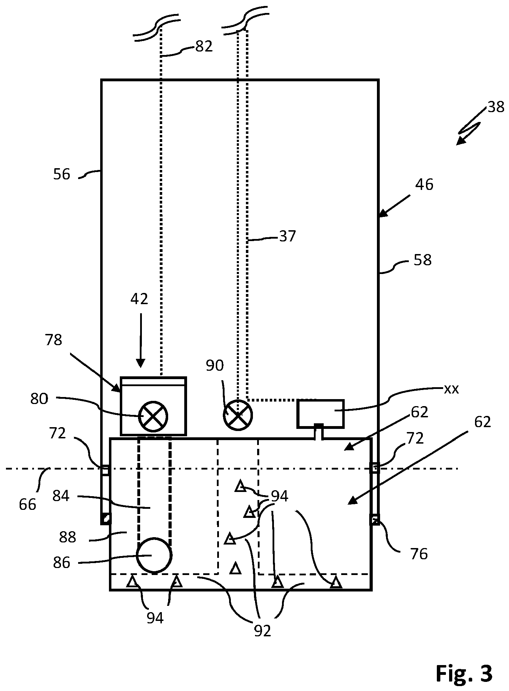

**Fig. 3** zeigt die Betätigungseinheit 38 in einer schematischen Schnittdarstellung. Die Schaltwippe 62 ist über seitliche Lagerzapfen bzw. Lagerfortsätze **72** am Gehäuse 46 innenseitig um die Schwenkachse 66 schwenkbar gelagert. Die Schaltwippe 62 ist mit einem elektrischen Schalter **74** verkoppelt. Zur staubdichten Abdichtung der stirnseitigen Öffnung 60 des Gehäuses 46 kann eine optionale Dichtung **76** zwischen dem Gehäuse 46 und der Schaltwippe 62 angeordnet sein. Die Dichtung 76 besteht vorzugsweise aus einem Elastomermaterial.

Die Fernprojektionseinrichtung 42 umfasst einen im Gehäuse 46 angeordneten Projektor **78** mit einer ersten Lichtquelle **80**, die Licht in dem für den Menschen sichtbaren Lichtspektrum emittiert. Der Projektor 78 ist eingangsseitig über eine (elektrisch leitende) Anschlussleitung 82 mit der Steuereinrichtung 34 verbunden. Der Projektor 78 ist vom hinteren Endabschnitt **82** der Schaltwippe 62 vorzugswiese beabstandet angeordnet. Das vom Projektor 78 emittierte Licht ist in einen Lichtleiter **84** einkoppelbar. Der Lichtleiter 84 ist hier integraler Bestandteil der Schaltwippe 62 und kann beispielsweise aus einem lichtdurchlässigen bzw. -leitenden Kunststoff bestehen. Die Projektionseinrichtung 62 umfasst zusätzlich eine Linse **86**, über die das vom Projektor 78 abgegebene Licht nach unten aus der Schaltwippe 62 herausführbar und auf der gewünschten Projektionsfläche fokussierbar ist. Die Linse 86 ist der Schaltwippe 62 vorzugsweise angeformt. Der Lichtleiter 84 kann von einem lichtundurchlässigen Material **88** der Schaltwippe 62 umgrenzt sein. Die Schaltwippe 62 ist hier somit als ein Mehrkomponentenbauteil ausgeführt. Sowohl das Gehäuse 46 als auch die Schaltwippe 62 bestehen zumindest teilweise, bevorzugt insgesamt, aus Kunststoff.

Die Betätigungseinheit kann eine zweite Lichtquelle **90** aufweisen, mittels derer die Schaltwippe 62 und/oder das Gehäuse 46 beleuchtbar bzw. zum Leuchten anregbar ist. So kann die Schaltwippe 62 beispielsweise einen oder mehrere Leuchtabschnitte **92** mit Lumineszenz Farbstoffen **94** aufweisen, die durch das von der zweiten Lichtquelle 90 emittierte Licht, insbesondere UV-Licht, anregbar sind. Die Lumineszenz Farbstoffen 94 sind vorzugsweise im Material der Schaltwippe 62 eingebettet angeordnet. Durch die zweite Lichtquelle 90 kann so bei Dunkelheit dem Benutzer des Tischs 10 eine Orientierungshilfe zum Auffinden und Betätigen der Betätigungseinheit 38 gegeben werden.

Es ist ersichtlich, dass die Betätigungseinheit 38 und die Fernprojektionseinrichtung 42 bei dem in Fig. 1 gezeigten Ausführungsbeispiel als eine gemeinsam handhabbare Baueinheit ausgeführt sind. Zu beachten ist, dass die Betätigungseinheit 38 anstelle der Schaltwippe 62 grundsätzlich auch eine berührungsempfindliche Sensoroberfläche aufweisen kann, die vorzugsweise an der Unterseite 50 oder der Stirnwand der Betätigungseinheit 38 angeordnet ist.

## Patentansprüche

1. Höhenverstellbarer Tisch (10) mit einem Tischgestell (12) das eine Tischplatte (14) trägt, mit einem Stellantrieb (32), einer Steuereinrichtung (34) und einer Betätigungseinheit (38) zum Verstellen des Tischgestells (12),
**dadurch gekennzeichnet, dass**
die Betätigungseinheit (38) eine Fernprojektionseinrichtung (42) zum projizierten Anzeigen einer Information zu einem Betriebsparameter des Tischs (10) aufweist.

2. Tisch (10) gemäß Anspruch 1, **dadurch gekennzeichnet, dass** die Betätigungseinheit (38) und die Fernprojektionseinrichtung (42) gemeinsam eine Baueinheit bilden.

3. Tisch (10) gemäß Anspruch 2, **dadurch gekennzeichnet, dass** die Betätigungseinheit (38) ein Gehäuse (46) aufweist und die Fernprojektionseinrichtung (42) zumindest teilweise, bevorzugt insgesamt, in dem Gehäuse (46) angeordnet ist.

4. Tisch (10) gemäß einem der vorhergehenden Ansprüche, **dadurch gekennzeichnet, dass** die Betätigungseinheit (38) ein Gehäuse (46) aufweist, aus dem, bevorzugt über eine stirnseitige Öffnung (60), eine Schaltwippe (62) herausragt, die relativ zum Gehäuse (46) bidirektional um eine Schwenkachse (66) aus einer Neutralstellung in eine jeweilige Funktionsstellung (68, 70) auslenkbar ist.

5. Tisch (10) gemäß Anspruch, **dadurch gekennzeichnet, dass** die Fernprojektionseinrichtung (42) einen Lichtleiter (84) umfasst, der integraler Bestandteil der Schaltwippe (62) und/oder des Gehäuses (46) ist.

6. Tisch (10) gemäß Anspruch, **dadurch gekennzeichnet, dass** die Schaltwippe (62) als ein Mehrkomponentenbauteil ausgeführt ist, mit einem Lichtleiter (84) und einem lichtundurchlässigen zweiten Material (88).

7. Tisch (10) gemäß **dadurch gekennzeichnet, dass** der Lichtleiter (84) eine optische Linse (86) umfasst.

8. Tisch (10) gemäß , **dadurch gekennzeichnet, dass** die Betätigungseinheit eine zweite Lichtquelle (90) aufweist und das Material des Gehäuses (46) und/oder das Material der Schaltwippe (62) zumindest abschnittsweise Lumineszenz Farbstoffe aufweist, die durch das von der zweiten Lichtquelle (90) emittierte Licht anregbar sind.

9. Tisch (10) gemäß Anspruch 1, **dadurch gekennzeichnet, dass** die Betätigungseinheit (38) an der Unterseite (40) der Tischplatte (14) befestigt ist und die Fernprojektionseinrichtung (42) zum Projizieren der Anzeige in Lotrichtung L nach unten eingerichtet ist.

10. Tisch (10) gemäß einem der vorergehenden Ansprüche, **dadurch gekennzeichnet, dass** das Gehäuse (46) und /oder die Schaltwippe (62) insgesamt aus einem Kunststoffmaterial besteht/bestehen.

11. Tisch (10) gemäß einem der vorhergehenden Ansprüche, **dadurch gekennzeichnet, dass** die Betätigungseinheit (38) mit der Tischplatte (14) verklebt oder verschraubt ist oder an dieser lösbar verrastet gehalten angeordnet ist.

12. Tisch (10) gemäß einem der vorhergehenden Ansprüche, **dadurch gekennzeichnet, dass** das Tischgestell (12) zumindest eine teleskopierbare Tischsäule (16, 18) umfasst.
